# FASCICULE DE BREVET EUROPEEN

(11) **EP 4 383 227 B1**
(45) Date de publication et mention de la délivrance du brevet: **24.06.2026**
(21) Numéro de dépôt: 23203931.3
(22) Date de dépôt: 17.10.2023
(51) Int. Cl.: G08G 1/017, G01S 7/02, G01S 7/41, G01S 13/86, G01S 7/48, G01S 13/931, G01S 13/91

(54) **PROCÉDÉ DE GÉNÉRATION D'UN DOCUMENT D'IMAGE**
VERFAHREN ZUR ERZEUGUNG EINES BILDDOKUMENTS
METHOD FOR GENERATING AN IMAGE DOCUMENT

(30) Priorité: 07.12.2022 FR 2212874
(43) Date de publication de la demande: 12.06.2024
(73) Titulaire: IDEMIA Road Safety France, 92400 Courbevoie (FR)
(72) Inventeur: GUIDON, Eric, 92400 Courbevoie (FR); DOMINGUES, Jonathan, 92400 Courbevoie (FR); HARBI, Rachid, 92400 Courbevoie (FR); ALLIOT, Samuel, 92400 Courbevoie (FR)
(74) Mandataire: Plasseraud IP

(56) Documents cités:
- WO-A1-2014/160027
- WO-A1-2017/116134
- DE-U1- 202016 100 889
- KR-B1- 102 162 130
- US-A1- 2021 303 871

## Description

### Domaine technique

La présente invention appartient au domaine du contrôle de véhicules sur une voie de circulation routière, et porte plus précisément sur un procédé de génération d'un document d'image dans lequel un véhicule, sur une voie de circulation routière, contrôlé par un système contrôle de véhicules, est désigné.

### Arrière-plan technologique

On connait du document EP2656105B1 un procédé pour établir un document image selon lequel un véhicule mesuré par un appareil radar peut être désigné cependant l'image d'un tel document image ne répond pas à certaines exigences locales telle que celle selon laquelle l'image du document ne doit contenir de manière reconnaissable que le véhicule concerné par l'infraction.

En outre, sur l'image du document d'image afin d'éviter toute ambiguïté, il ne faut pas que la figure géométrique qui sert à désigner le véhicule en infraction dans la photo touche un autre véhicule.

Une possibilité serait de filtrer la génération du document d'image de manière à n'en générer que si le véhicule est isolé cependant ce filtrage présente l'inconvénient d'empêcher les relevés automatiques d'infraction en cas de trafic dense.

Une solution partielle permettant de rendre la désignation basée sur le transfert de la détection du véhicule vu par le capteur (radar ou Lidar) dans l'image plus précise est de définir une figure géométrique de désignation respectant des critères portant par exemple sur son bord inférieur qui doit appartenir à la ligne passant par les points de contact des roues du véhicule avec le sol sur l'image, or ce critère est difficile à évaluer, générant des faux négatifs.

### Présentation de l'invention

L'invention a pour but de remédier au moins en partie à ces inconvénients et préférentiellement à tous, et vise notamment à proposer un procédé de génération d'un document d'image dans lequel un véhicule, sur une voie de circulation routière, contrôlé par un système contrôle de véhicules, est désigné sans ambigüité.

A cet effet il est proposé un procédé de génération d'un document d'image dans lequel un véhicule, sur une voie de circulation routière, contrôlé par un système contrôle de véhicules, est désigné, le système de contrôle de véhicules étant disposé fixe et comprenant une unité de contrôle, un télédétecteur comprenant un capteur radar et/ou lidar et un dispositif de prises de vues tel qu'un capteur image ou vidéo, notamment une caméra , le télédétecteur opérant sur un champ de télédétection radar et/ou lidar couvrant au moins ladite voie de circulation, le dispositif de prises de vues opérant sur un champ de détection optique comprenant tout ou partie de ladite voie de circulation couverte par le champ de télédétection radar et/ou lidar;
ledit procédé comprenant des étapes de:
- acquisition par le télédétecteur d'un point de piste de coordonnées représentatives du véhicule contrôlé, dans un repère lié à la voie de circulation ;
- acquisition par le dispositif de prises de vues d'une image bidimensionnelle à un moment déterminé ;
- transposition d'une représentation du véhicule contrôlé dans le repère lié à la voie de circulation vers un repère de l'image bidimensionnelle, ladite représentation du véhicule contrôlé dans le repère de l'image bidimensionnelle correspondant à un cadre de représentation du véhicule contrôlé comportant une marque d'alignement désignant le point de piste ;
- analyse de l'image bidimensionnelle de manière à détecter dans le repère de l'image tout ou partie des véhicules présents sur l'image et à entourer chacun des véhicules détectés par un cadre bidimensionnel analytique, notamment par mise en œuvre de réseaux de neurones ;
- identification dans l'image bidimensionnelle du cadre bidimensionnel propre au véhicule contrôlé parmi les cadres bidimensionnel analytique entourant les véhicules détectés par analyse de proximité entre chacun desdits cadres bidimensionnels analytiques et la représentation du véhicule contrôlé dans ladite image ;
- transposition dans l'image bidimensionnelle d'un cadre de désignation défini en relation avec la représentation du véhicule contrôlé et de dimensions déterminées en fonction du véhicule contrôlé ;
- repositionnement du cadre de désignation dans l'image bidimensionnelle, ledit cadre de désignation étant déplacé avec ladite marque d'alignement du cadre de représentation du véhicule contrôlé de manière à ce que ladite marque d'alignement soit superposée à une marque de centrage du cadre bidimensionnel propre au véhicule ; le positionnement de ladite marque de centrage dans le cadre bidimensionnel dépendant du placement du système de contrôle de véhicules par rapport à la voie de circulation de manière à s'adapter à l'effet de perspective lié audit placement ;
- sélection d'une image de situation comprenant le cadre bidimensionnel propre au véhicule contrôlé et le cadre de désignation repositionné, l'image de situation obtenue formant l'image du document d'image.
- De manière avantageuse, le procédé selon l'invention comporte une étape d'application de floutage dans une zone périphérique extérieure audit cadre bidimensionnel propre au véhicule contrôlé de l'image de situation et affichage du cadre de désignation repositionné, ce qui permet notamment qu'aucun autre véhicule ne soit reconnaissable sur l'image du document.

Avantageusement, les coordonnées du point de piste sont bidimensionnelles ou tridimensionnelles, ce qui permet de couvrir plusieurs voies de circulation, les coordonnées tridimensionnelles, obtenues par exemple avec un capteur laser à balayage, pouvant servir à l'identification de la classe du véhicule.

De manière avantageuse, dans le repère bidimensionnel de l'image, ladite marque d'alignement est centrée sur le point piste, ainsi le point piste c'est-à-dire le point ayant pour coordonnées celles acquises par le télédétecteur représentatives du véhicule contrôlé est reporté dans l'image bidimensionnelle ce qui permet aussi d'évaluer la qualité de l'alignement du télédétecteur avec le dispositif de prises de vues des et éventuellement à terme sa dérive, et sert au positionnement du cadre de désignation.

Avantageusement, chaque cadre bidimensionnel analytique entourant un véhicule comporte au moins un point caractéristique qui appartient au plan de la voie de circulation, ce qui facilite le changement de repère entre l'image bidimensionnelle et le repère lié à la voie de circulation ainsi qu'une analyse de proximité dans le repère lié à la voie de circulation entre ce cadre et la piste.

De manière avantageuse, chaque cadre bidimensionnel analytique entourant un véhicule est une forme géométrique notamment un rectangle, dont les dimensions sont minimisées tout en contenant ledit véhicule intégralement, ce qui permet d'obtenir une forme simple, telle qu'un rectangle, épousant au mieux, c'est à dire le plus étroitement possible, le véhicule.

Avantageusement, le procédé comporte une étape de classification du véhicule contrôlé parmi des classes de véhicules prédéterminées par analyse du cadre bidimensionnel propre audit véhicule contrôlé, ce qui permet ensuite de pouvoir définir une dimension de cadre de désignation adaptée au véhicule contrôlé.

De manière avantageuse, à l'étape d'indentification le cadre bidimensionnel propre au véhicule contrôlé est identifié dans l'image bidimensionnelle comme étant le cadre bidimensionnel analytique le plus proche de la représentation du véhicule contrôlé contenant tout ou partie de ladite représentation du véhicule contrôlé, notamment par calcul de sores d'intersections entre chaque cadre bidimensionnel analytique de l'image et la représentation du véhicule contrôlé dans le repère de l'image, ce qui permet d'associer un cadre bidimensionnel au véhicule contrôlé dans l'image bidimensionnelle sur la base de critères géométriques, notamment avec des scores comparables entre eux.

Avantageusement, le procédé comporte une étape de confirmation de l'identification dans l'image bidimensionnelle du cadre bidimensionnel propre au véhicule contrôlé pendant laquelle il est vérifié dans le repère lié à la voie de circulation que la marque de centrage du cadre bidimensionnel propre au véhicule est proche, notamment à moins de 2 mètres, du point piste, ce qui permet de vérifier la cohérence de l'appariement effectué sans avoir besoin de connaître les délimitations des voies nécessaire à la vérification d'appartenance à une voie donnée.

De manière avantageuse, le cadre bidimensionnel propre au véhicule est un rectangle et sa marque de centrage est située sur son côté inférieur et positionnée au quart de sa longueur en partant du coin inférieur droit dudit rectangle, ce qui permet de positionner la marque de centrage entre les roues avant du véhicule et par conséquent de couvrir cette partie par le cadre de désignation et notamment, par ses dimensions de garantir que ledit cadre de désignation comprendra la plaque d'immatriculation du véhicule contrôlé.

Avantageusement, le cadre de désignation a des dimensions caractéristiques liées à la classe du véhicule contrôlé, ledit cadre de désignation est notamment de forme rectangulaire dont les côtés sont préférentiellement verticaux et horizontaux dans le repère de l'image bidimensionnelle, ce qui permet de désigner sans ambigüité le véhicule contrôlé au moyen de ce cadre de désignation.

De manière avantageuse, le télédétecteur et le dispositif de prises de vues sont disposés et orientés complètement ou partiellement face à un sens de circulation sur ladite voie de circulation du véhicule contrôlé, ce qui permet de visualiser sur les images les faces avant des véhicules à contrôler et ainsi garantir que le cadre de désignation contienne des parties de la face avant du véhicule contrôlé.

Avantageusement, l'image de situation est tout ou partie de ladite image bidimensionnelle acquise par le dispositif de prises de vues à l'étape d'acquisition de l'image bidimensionnelle, ce qui permet de proposer une seule partie de l'image bidimensionnelle brute acquise mieux centrée sur le véhicule contrôlé. En variante, l'image de situation est acquise par un autre dispositif de prises de vues du système de contrôle de véhicules au même moment déterminé que l'étape d'acquisition de l'image bidimensionnelle et en ce que l'étape de sélection comporte une sous-étape de transposition dans ladite image de situation du cadre bidimensionnel propre au véhicule contrôlé et du cadre de désignation repositionné, ce qui permet d'utiliser deux dispositif de prises de vues distincts synchronisés, l'autre dispositif de prises de vues étant notamment une caméra lecture de plaque.

De manière avantageuse, à l'étape de sélection l'image de situation est sélectionnée de manière à ce que ledit cadre de désignation repositionné figure individuellement et complètement sur l'image de situation et il est notamment vérifié lors de ladite étape de sélection que le cadre de désignation comporte une plaque d'immatriculation complète dudit véhicule, ce qui permet de ne pas générer de document d'image si la plaque d'immatriculation ne peut être intégralement visualisée par exemple, ce qui est notamment identifiable par analyse d'image ou si l'image de situation est acquise par une caméra lecture de plaque.

Préférentiellement ladite image de situation sélectionnée couvre au moins une partie de face avant du véhicule de manière à ne pas générer de document d'image si le véhicule est vu de l'arrière.

Préférentiellement la ladite image de situation sélectionnée comporte des parties d'un unique véhicule, ce qui permet de la générer si une partie du cadre de désignation comporte par exemple une partie de route, comme dans le cas d'un motocycle en tant que contrôlé par exemple.

De même, l'invention concerne également un système de contrôle de véhicules sur une voie de circulation routière, disposé fixe et comprenant une unité de contrôle, un télédétecteur comprenant un capteur radar et/ou lidar et un dispositif de prises de vues tel qu'un capteur image ou vidéo, notamment une caméra, le télédétecteur opérant sur un champ de télédétection radar et/ou lidar couvrant au moins ladite voie de circulation, le dispositif de prises de vues opérant sur un champ de détection optique comprenant tout ou partie de ladite voie de circulation couverte par le champ de télédétection radar et/ou lidar, caractérisé en ce que l'unité de contrôle met en œuvre un procédé de génération d'un document d'image selon l'invention et bénéficiant des mêmes avantages que cités précédemment.

En outre, l'invention concerne un document d'image, dans lequel un véhicule contrôlé par un système de contrôle de véhicules et roulant sur une voie de circulation est désigné, le document d'image étant généré par un procédé selon l'invention, ce qui procure les mêmes avantages que le procédé objet de l'invention.

Avantageusement, le document d'image selon l'invention comprend :
- une image de situation partiellement floutée, une zone floutée s'étendant autour d'un cadre bidimensionnel propre au véhicule contrôlé de l'image de situation du document d'image et ;
- un cadre de désignation visible superposant l'image de situation, le cadre de désignation étant situé à l'intérieur dudit cadre bidimensionnel ;
ce qui permet une désignation non ambiguë du véhicule contrôlé sur l'image du document d'image y compris en situation de trafic dense, le cadre de désignation ne couvrant qu'un unique véhicule, tout en disposant d'une image claire et non surchargée, le cadre bidimensionnel n'étant lui-même pas matérialisé , absence de contour, contrairement au cadre de désignation bien visible.

Avantageusement, toute partie de l'image de situation extérieure au cadre bidimensionnel appartient à la zone floutée et en toute partie de l'image de situation située à l'intérieur du cadre bidimensionnel est non floutée, ce qui permet de rendre non reconnaissable les véhicules et individus dans l'environnement du véhicule contrôlé.

Ainsi, un véhicule de l'image de situation est désigné en tant que véhicule contrôlé si son cadre de désignation figure individuellement et complètement sur l'image de situation et à condition que le cadre de désignation:
- comporte une plaque d'immatriculation complète dudit véhicule; et notamment s'il couvre au moins une partie de face avant du véhicule et/ou-comporte des parties d'un unique véhicule , la complétion de ces critères résultant notamment de la mise en œuvre du procédé selon l'invention.

### Présentation des figures

L'invention sera mieux comprise, grâce à la description ci-après, qui se rapporte à des modes de réalisations et des variantes selon la présente invention, donnés à titre d'exemples non limitatifs et expliqués avec référence aux dessins schématiques annexés, dans lesquels :
[fig. 1] la figure 1 montre un exemple de disposition d'un système contrôle de véhicules aux abords de voies de circulation d'un axe routier où passent des véhicules, selon un mode de réalisation possible de l'invention ;
[fig. 2] la figure 2 illustre schématiquement un autre exemple de disposition d'un système contrôle de véhicules aux abords de voies de circulation d'un axe routier où passent des véhicules, selon un mode de réalisation possible de l'invention ;
[fig. 3] la figure 3 est une représentation schématique d'un système de contrôle de véhicules, selon un mode de réalisation possible de l'invention ;
[fig. 4] la figure 4 est un diagramme montrant les principales étapes d'un procédé de génération d'un document d'image selon un mode de réalisation possible de l'invention ;
[fig. 5] la figure 5 est une vue explicative de l'application du procédé dans un cas d'usage d'application du procédé selon un mode de réalisation possible de l'invention ;
[fig. 6a] la figure 6a est un triptyque explicitant une étape du procédé selon un mode de réalisation possible de l'invention ;
[fig. 6b] la figure 6b est un triptyque explicitant une autre étape du procédé selon un mode de réalisation possible de l'invention ;
[fig. 7] la figure 7 est une illustration d'une étape du procédé selon un mode de réalisation possible de l'invention ;
[fig. 8] la figure 8 est une vue explicative de l'image du document d'image selon un mode de réalisation possible de l'invention ;
[fig. 9] la figure 9 est une vue du document d'image selon un mode de réalisation possible de l'invention.

### Description détaillée

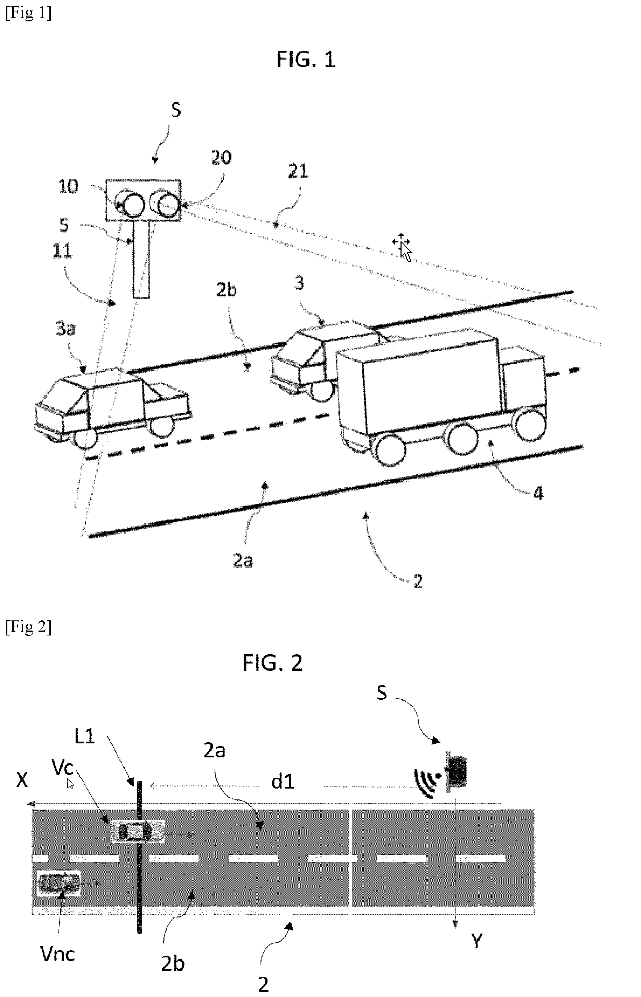

En référence à la figure 1 [fig. 1], un système de contrôle de véhicules S est positionné fixe aux abords d'un axe routier 2 permettant la circulation de véhicules. L'axe routier 2 peut être tout espace de circulation sur lequel des véhicules 3, 4 circulent : autoroute, rue, etc.. De préférence, l'axe routier 2 comprend au moins deux voies de circulation 2a, 2b permettant la circulation de véhicules 3, 4 entre leurs bords. L'axe routier 2 est délimité par un revêtement de surface spécialement conçu pour la circulation routière, typiquement un béton bitumineux. Les voies de circulation 2a, 2b sont généralement délimitées par un marquage routier à la surface de la route, c'est-à-dire un balisage constitué de signes visuels apposés à la surface de la route.

Le système de contrôle de véhicules S est positionné fixe par rapport aux voies de circulation 2a, 2b de l'axe routier 2, et en dehors des voies de circulation 2a, 2b de l'axe routier 2. De préférence, le système de contrôle de véhicules S se trouve à minimum 0,5 m du bord d'une voie de circulation dont il contrôle la circulation des véhicules, afin de disposer d'un recul suffisant, et de préférence à au moins 1 m du bord de la voie de circulation, mais il peut également être situé au-dessus des voies de circulation, sur un portique par exemple. De préférence également, le système de contrôle de véhicules S est disposé à une hauteur supérieure à 1, 2 m de la surface des dites voies de circulation 2a, 2b, de préférence à une hauteur supérieure à 2 m de la surface des dites voies de circulation 2a, 2b, et de préférence encore supérieure à 3 m. A cet effet, le système de contrôle de véhicules S peut être disposé sur un mât 5 comme dans l'exemple illustré. La disposition en hauteur du système de contrôle de véhicules S permet de limiter le masquage des champs de détection des capteurs du système de contrôle de véhicules S au moins par la plupart des véhicules légers, telle que la voiture 3 qui se trouve devant le camion 4 dans l'exemple.

Le système de contrôle de véhicules S comprend une unité de contrôle, un télédétecteur comprenant un capteur radar et/ou lidar 10 et un dispositif de prises de vues 20 tel qu'un capteur image (par exemple un capteur CCD ou CMOS) ou vidéo, notamment une caméra.

Le télédétecteur 10 opère sur un champ de télédétection 11 radar et/ou lidar de l'axe routier 2, couvrant de préférence au moins deux voies de circulation, dont les limites sont représentées sur la figure 1 par des lignes en pointillés couvrant au moins ladite voie de circulation.

Le télédétecteur 10 est configuré pour émettre un flux de données spatiales , notamment en deux ou trois dimensions, représentatives de la détection de véhicules 3, 4 sur l'axe routier 2 et traversant le champ de télédétection 11, de manière à permettre la représentation de véhicules en temps réel dans un repère lié à la voie de circulation.

Le télédétecteur 10 exploite par exemple l'effet Doppler, au moyen notamment d'un radar, afin de déterminer des mesures de vitesse et de position, et/ou une technologie temps de vol, au moyen notamment d'un lidar ou laser, qui permet de déterminer la distance et le(s) angles entre le télédétecteur 10 et le véhicule contrôlé, apportant ainsi une information de position. De préférence, le télédétecteur 10 comporte un radar hyperfréquence, avec des ondes électromagnétiques émises avec une fréquence supérieure à 20 GHz, et / ou un lidar préférentiellement de longueur d'onde 865 nm.

Le dispositif de prises de vues 20 opère sur un champ de détection optique 21 de l'axe routier 2 comprenant tout ou partie de ladite voie de circulation couverte par le champ de télédétection 11.

Le dispositif de prises de vues 20 est configuré pour émettre des données optiques telles qu'une image bidimensionnelle du champ optique 21, ou un flux de données vidéo, notamment en temps réel, comprenant la représentation, dans un repère image, de véhicules 3,4 traversant le champ de détection optique 21.

Tel que représenté le champ de télédétection 11 et le champ optique 21 sont au moins partiellement superposés, avec au moins la majorité du champ optique 21 dans le champ de télédétection 11. De préférence, le champ de télédétection 11 et le champ optique 21 se recouvrent au maximum au moins sur la portion des voies de circulation 2a, 2b de l'axe routier 2 dont la circulation doit être contrôlée, de manière à ce qu'un véhicule 3, 4 y circulant se retrouve à la fois dans le champ de télédétection 11 et dans le champ de optique 21, afin qu'à la fois les données de télédétection et l'image bidimensionnelle puissent être susceptibles d'être représentatives de la détection dudit véhicule 3, 4.

Préférentiellement, le dispositif de prises de vues 20 est configuré pour qu'au moins des mesures de positions puissent être dérivées du flux de données optique. De préférence, des mesures de vitesse peuvent également être dérivées du flux de données optiques.

Le système de contrôle de véhicules S comprend également des composants permettant de traiter des données, tel qu'un processeur, une mémoire, des bus de communication, etc. Dans la mesure où ces autres composants ne sont spécifiques que par le procédé qu'ils mettent en œuvre et par les instructions qu'ils contiennent, ils ne seront pas détaillés dans la suite.

La figure 2 [fig. 2] illustre le cas où deux véhicules Vc et Vnc circulent dans le même sens sur deux voies de circulations distinctes, lesdits véhicules appartenant aux champs de télédétection 11 et optique 21, et arrivant face au système de contrôle de véhicules S de manière à visualiser sur les images les faces avant des véhicules à contrôler, et notamment leur plaque avant. En variante, une orientation opposée des champs par rapport au sens de circulation permettrait de visualiser sur les images les faces arrière des véhicules à contrôler en cas de recherche de caractérisation de leur plaque arrière, notamment pour les motocycles Le véhicule cible Vc est contrôlé en infraction alors qu'il commet une violation de limite de vitesse lors de sa traversée de la ligne de mesure L1, appelée aussi ligne virtuelle d'infraction, les flèches illustrant la direction des véhicules Vc, Vnc. Le positionnement de la ligne de mesure L1 est prédéterminé de manière connue. Ici, la distance longitudinale d1 entre le système de contrôle S et la ligne de mesure L1 est de 28 mètres selon l'axe des abscisses X dirigé parallèlement aux voies de circulation. Le repère lié à la voie de circulation 2a, 2b est de préférence bidimensionnel, et est par exemple la surface de l'axe routier 2, où s'organisent spatialement les véhicules Vc, Vnc, et qui peut être dotée de coordonnées (x,y) selon les axes d'abscisse X et ordonnées Y, il s'agit typiquement d'un plan, ou d'une surface approximant un plan.

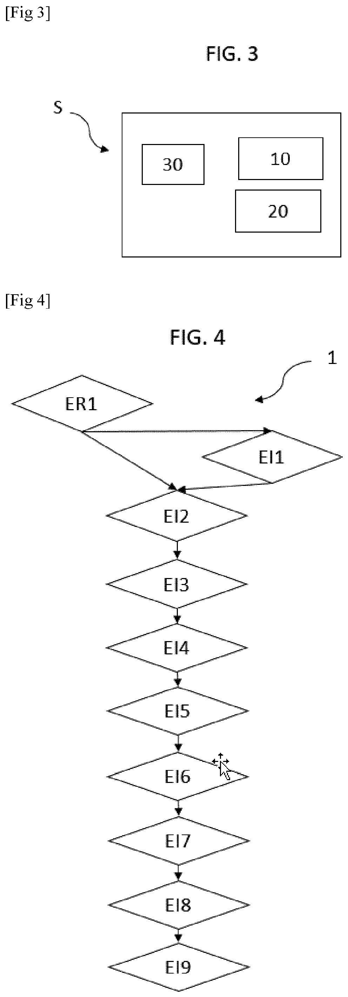

Sur la figure 3 [fig. 3] est représenté schématiquement le système de contrôle de véhicules S comprenant une unité de contrôle 30, un télédétecteur 10 comprenant un capteur radar et/ou lidar et un dispositif de prises de vues 20 tel qu'un capteur image ou vidéo, notamment une caméra. Le procédé de génération d'un document d'image est préférentiellement hébergé, complètement ou partiellement, dans l'unité de contrôle 30 qui communique avec les autres composants du système de contrôle. Une partie du procédé peut également être hébergée sur un serveur déporté distant, la partie afférente du traitement de l'information en vue de la génération du document d'image étant déportée.

La figure 4 [fig. 4] illustre un mode de réalisation du procédé 1 selon l'invention. Le procédé met en œuvre, de manière continument répétée, notamment pour une pluralité de trames successives, plusieurs étapes détaillées ci-dessous. Le contrôle de véhicules étant un processus continu, le système de contrôle de véhicules S met typiquement en œuvre certaines étapes du procédé 1 de génération d'un document d'image pendant plusieurs jours d'affilé, sans interruption.

Ainsi, de façon continument répétée, toute les 55 ms par exemple pour un radar et/ou toutes les 10 ms par exemple pour un lidar, est acquis lors de l'étape ER1 d'acquisition par le télédétecteur 10 un point de piste de coordonnées, ici bidimensionnelles, représentatives du véhicule contrôlé, dans un repère lié à la voie de circulation, le télédétecteur 10 émettant un flux de données spatiales représentatives de la détection de véhicules Vc, Vnc sur l'axe routier 2. Dans le cas où le télédétecteur 10 est constitué d'un lidar, non combiné à un radar, le lidar est préférentiellement doté d'un système mécanique de balayage vertical de manière à améliorer la précision des coordonnées bidimensionnelles. En outre, des coordonnées tridimensionnelles pourraient être obtenues par un radar 4DHD seul, ce dernier fournissant des coordonnées cylindriques. Il s'agit, dans le repère lié à la voie de circulation, parmi les points de la piste correspondant à la trajectoire du radar, du lidar ou des deux, de sélectionner le point de la piste qui a l'abscisse x la plus proche de la ligne L1 virtuelle d'infraction, notamment à moins de -1,5 m de la ligne L1, afin d'être sûr que le véhicule Vc ait franchi la ligne virtuelle d'infraction. Classiquement, ce point de piste correspond à un point réfléchi de la face avant du véhicule contrôlé Vc. De manière connue, en cas de combinaison d'un capteur radar et lidar leurs données sont préalablement mises en correspondance spatiale et temporelle. Il est facilement possible de convertir les données afin de les exprimer dans ce repère spatial. Par exemple, pour un télédétecteur comprenant un radar 10, les données acquises comprennent une distance et une position angulaire dans un repère polaire par rapport au radar 10. Afin de les exprimer dans le repère spatial lié à la voie de circulation ou à l'axe routier, il suffit de connaître la position du radar dans ce repère spatial, par exemple au moyen de paramètres de position renseignés lors de l'installation du système de contrôle de véhicules S. Il s'agit notamment de la position du radar 10 dans le repère spatial lié à la voie de circulation 2a, 2b et les 3 angles d'Euler qui permettent de définir le repère du radar sans ambiguïté.

En parallèle, de façon continûment répétée, par exemple toutes les 33 ms, ou sur commande, est acquis lors de l'étape d'acquisition EI1 par le dispositif de prises de vues une image bidimensionnelle, notamment à un moment déterminé par commande de déclenchement synchronisé d'une acquisition d'une image ou par sélection d'une image parmi le flux de données vidéo, le dispositif de prises de vues 20 émettant un flux de données optiques représentatives de la détection de véhicules Vc, Vnc sur l'axe routier 2. De manière connue, le moment est prédéterminé en fonction du positionnement du véhicule contrôlé par rapport à la ligne L1 virtuelle d'infraction.

Il est à noter que les flux de données sont émis même lorsqu'aucun véhicule 3,4 n'est présent sur l'axe routier 2.

L'étape de transposition EI2 d'une représentation du véhicule contrôlé dans le repère lié à la voie de circulation vers un repère de l'image bidimensionnelle, opère un changement de repère. Ladite représentation du véhicule contrôlé, c'est-à-dire ici télédétecté, dans le repère de l'image bidimensionnelle correspond à un cadre comportant une marque d'alignement désignant le point de piste. Plus particulièrement, ladite représentation du véhicule contrôlé dans le repère lié à la voie de circulation est construite à partir d'un cuboïde de dimensions standards (par exemple 4.4 m de profondeur, 2m de largeur et 1.4 m de hauteur) représentant le véhicule en infraction en mouvement dans le repère de la voie de circulation (les données radar de vitesse et de temps étant disponibles dans le repère route), et une fois envoyée dans l'image bidimensionnelle, il y a transformation de cette représentation en un cadre comportant une marque d'alignement désignant le point de piste. Préférentiellement, le plus petit rectangle contenant ce cuboïde est calculé et forme dans le repère de l'image bidimensionnelle le cadre comportant une marque d'alignement désignant le point de piste de coordonnées représentatives du véhicule contrôlé, dans le repère de l'image bidimensionnelle. Ce cadre est donc préférentiellement rectangulaire , notamment de côtés parallèles et perpendiculaires aux axes définissant le repère de l'image de manière à définir une forme simple mais ce cadre pourrait avoir une autre forme géométrique. De même le choix de ne pas chercher à classifier le véhicule détecté à cette étape et de créer un cadre sur la base d'un cuboïde de dimensions standard permet de ne pas classifier le véhicule contrôlé sur la base d'informations radar et/ou lidar, ce qui est complexe et moins précis.

Pour mieux l'illustrer, la marque d'alignement désignant le point de piste sera dans la suite des figures représentée sous la forme d'un cercle centré sur ledit point de piste transposé dans le repère de l'image bidimensionnelle.

L'image bidimensionnelle est alors enrichie de ce cadre de représentation du véhicule contrôlé comportant une marque d'alignement désignant le point de piste , il est alors procédé à une étape d'analyse EI3 de l'image bidimensionnelle brute du dispositif de prises de vues ou de l'image bidimensionnelle enrichie, de manière à détecter dans le repère de l'image tout ou partie des véhicules présents sur l'image et à entourer chacun des véhicules détectés par un cadre bidimensionnel analytique, notamment par mise en œuvre de réseaux de neurones. Préférentiellement, dans l'image bidimensionnelle, à l'aide par exemple d'algorithmes utilisant l'Intelligence Artificielle, est réalisé le calcul de tous les cuboïdes représentant des véhicules dans l'image et le calcul des plus petits rectangles les contenant, ces derniers sont appelés : rectangles analytiques. Le choix de la forme rectangulaire permet la simplicité de traitement, tout en épousant relativement bien la forme du véhicule. Préférentiellement, un point caractéristique du cadre bidimensionnel analytique, et notamment ici, l'intégralité du côté inférieur des rectangles analytiques est défini par construction de l'algorithme comme appartenant au plan de la voie de circulation du véhicule entouré. L'image bidimensionnelle est de nouveau enrichie, comportant désormais les cadres bidimensionnels analytiques, il est alors procédé à l'étape d'identification EI4 dans l'image bidimensionnelle enrichie du cadre bidimensionnel propre au véhicule contrôlé parmi les cadres bidimensionnel analytique entourant les véhicules détectés par analyse de proximité entre chacun desdits cadres bidimensionnels analytiques et le cadre de représentation du véhicule contrôlé dans ladite image. Préférentiellement, le cadre bidimensionnel propre au véhicule contrôlé est identifié dans l'image bidimensionnelle comme étant le cadre bidimensionnel analytique le plus proche de la représentation du véhicule contrôlé ou contenant ladite représentation du véhicule contrôlé, préférentiellement par calcul de sores d'intersections entre chaque cadre bidimensionnel analytique de l'image et la représentation du véhicule contrôlé dans le repère de l'image. Cette identification est par exemple effectuée par calcul des intersections des cadres bidimensionnels analytiques proches avec le cadre de représentation du véhicule contrôlé et choix du rectangle analytique présentant le meilleur score d'intersection, représentatif du recouvrement entre ces deux cadres formant une paire, le score d'intersection étant ici déterminé pour chaque paire comme le ratio surfacique du cadre de représentation du véhicule contrôlé rapporté au cadre bidimensionnel analytique, ce score devant être supérieur à 0.5. D'autres critères d'association peuvent s'ajouter, comme la similarité des vitesses et positions évaluées indépendamment d'une part par le radar et/ou lidar pour la représentation du véhicule contrôlé et d'autre part par le dispositif de prise de vues pour le véhicule du cadre bidimensionnel analytique propre au véhicule contrôlé. Si une classification du véhicule contrôlé avait été réalisée par le radar et/ou lidar, ainsi que lors de l'analyse EI3 de l'image bidimensionnelle enrichie alors une contrainte additionnelle serait que les deux classes calculées sur la base des deux informations distinctes soient identiques.

Comme les cadres analytiques, le cadre bidimensionnel propre au véhicule prend ici la forme d'un rectangle et il comporte une marque de centrage située sur son côté inférieur et positionnée au quart de sa longueur en partant du coin inférieur droit dudit rectangle. Pour mieux l'illustrer, la marque de centrage sera dans la suite des figures représentée sous la forme d'un cercle centré sur ledit point du côté inférieur du rectangle et positionné au quart de sa longueur en partant du coin inférieur droit dudit rectangle. Ce positionnement au quart de la marque de centrage permet de prendre en compte de manière suffisamment qualitative l'effet de perspective lié au positionnement latéral du système S par rapport à la voie de circulation si bien que ce point est globalement situé entre les points de contact pneu-chaussée des roues avant. Bien entendu cela dépend du placement du système S, si le système S était au-dessus des voies, et non déporté latéralement, ce point serait plutôt positionné à la moitié du côté inférieure du rectangle analytique de manière à s'adapter à la perspective du cas d'usage. Ces variantes n'excluent pas d'autres adaptations plus complexes, notamment voie par voie.

Une étape additionnelle de vérification de cohérence, non représentée sur la figure, peut consister en un transfert d'un point du côté inférieur du cadre bidimensionnel analytique propre au véhicule contrôlé, préférentiellement sa marque de centrage, de l'image bidimensionnelle vers le repère de la voie de circulation, puisque ici par construction ce côté inferieur appartient au plan de la voie de circulation et donc ce point appartient au plan de la voie de circulation (notamment proche du centre de la voie de circulation, comme expliqué dans le paragraphe précédent), et en la vérification que dans ce repère de la voie de circulation, le point obtenu, soit relativement proche du point de la piste (avec un tolérance par exemple maximum de 2 m en abscisse et en ordonnée) puisque ces deux points sont censés appartenir à la face avant du véhicule et être proches s'il n'y a pas eu erreur d'identification du cadre bidimensionnel analytique propre au véhicule contrôlé.

L'étape de classification EI5 du véhicule contrôlé parmi des classes de véhicules prédéterminées par analyse du cadre bidimensionnel propre audit véhicule contrôlé est préférentiellement réalisée à ce stade de manière à ne pas analyser, notamment par utilisation de réseaux de neurones, tous les cadres analytiques de l'image bidimensionnelle mais uniquement celui qui nous intéresse par souci d'économie de ressources de calcul, néanmoins cette étape EI5 de classification pourrait également être réalisée plus tôt dans le procédé sur tout ou partie (limitée par exemple à une zone proche de la ligne d'infraction) des cadres analytiques voire en continu, c'est-à-dire à la volée, pour toutes les images acquises (en utilisant notamment en cas de vidéo une analyse de mouvement des formes) indépendamment d'une détection d'infraction, et donc indépendamment d'un véhicule contrôlé. Ici, à partir du rectangle analytique propre audit véhicule contrôlé retenu, on détermine à l'aide d'algorithmes utilisant l'Intelligence Artificielle la classe du véhicule parmi des classes telle que : moto, véhicule léger, poids lourd.

Il est ensuite procédé à l'étape de transposition EI6 dans l'image bidimensionnelle enrichie d'un cadre de désignation défini en relation avec la représentation du véhicule contrôlé et de dimensions déterminées en fonction du véhicule contrôlé. Préférentiellement, dans le repère de la voie de circulation le cuboïde de dimension standard représentant le véhicule en infraction est transformé de manière à lui affecter les dimensions propres à la classe du véhicule déterminée à l'étape précédente de classification EI5. Il devient alors un cuboïde particularisé présentant une longueur, largeur et hauteur dépendantes du résultat de classification précédent, et on transpose (par changement de repère) alors une partie réduite par homothétie, typiquement le tiers, de la face avant de ce cuboïde particularisé dans l'image bidimensionnelle dont l'enrichissement est ainsi mis à jour. Cette partie réduite est appelée cadre de désignation et est préférentiellement de forme rectangulaire et représente donc une partie réduite de la face avant du véhicule en infraction, et présente des dimensions propres à la classe affectée au véhicule contrôlé à l'étape de classification EI5. Ledit cadre de désignation est préférentiellement de forme rectangulaire dont les côtés sont notamment verticaux et horizontaux dans le repère de l'image bidimensionnelle pour des raisons de clarté de compréhension du document d'image.

Il est alors procédé à l'étape de repositionnement EI7 du cadre de désignation dans l'image bidimensionnelle enrichie, ledit cadre de désignation étant déplacé avec ladite marque d'alignement, marque d'alignement désignant pour mémoire le point de piste, de manière à ce que ladite marque d'alignement soit superposée à la marque de centrage du cadre bidimensionnel propre au véhicule contrôlé. Il y a alors superposition de la marque d'alignement du cadre de désignation sur la marque de centrage du cadre bidimensionnel propre au véhicule contrôlé. Dit autrement, dans l'image bidimensionnelle, on procède au recalage du cadre de désignation représentant une partie réduite de la face avant du véhicule sur le cadre bidimensionnel propre au véhicule contrôlé de façon à ce que le point de la piste vienne chevaucher un point particulier du cadre bidimensionnel propre au véhicule contrôlé, ce point particulier étant ici défini, de par le positionnement du système, comme étant le point situé sur le côté inférieur du cadre bidimensionnel propre au véhicule contrôlé, préférentiellement rectangulaire, et situé à une distance égale au quart de la longueur de ce côté:

Il est alors procédé à la sélection EI8 d'une image de situation et à la transposition dans ladite image de situation du cadre bidimensionnel propre au véhicule contrôlé et du cadre de désignation repositionné. Cette image de situation peut être une des images bidimensionnelles acquises si plusieurs ont été traitées selon les étapes précédentes du procédé, cette image de situation peut aussi être une sous-partie d'image bidimensionnelle acquise, et en cas de caméras multiples dont les images sont fusionnées pour créer une image bidimensionnelle panoramique, l'image de situation sélectionnée peut correspondre à l'image bidimensionnelle acquise par une seule de ces caméras, à savoir celle couvrant le champ optique dans lequel était majoritairement situé le véhicule contrôlé (déterminable par un calcul d'intersection), ce qui est notamment le cas lorsqu'une caméra est disposée par voie de circulation, et dans le cas où il existe une caméra de contexte, notamment panoramique, qui fournit l'image bidimensionnelle acquise EI1 sur laquelle est effectuée le traitement, l'image de situation correspond alors notamment à l'image synchrone prise par une autre caméra dédiée (notamment de lecture de plaque) couvrant par son champ optique la position du véhicule contrôlé, toutes ces images étant temporellement synchronisées et leurs repères spatialement liés entre eux de manière prédéterminée et connue par construction du système S, et dans ce cas la transposition des cadres de l'image bidimensionnelle enrichie vers l'image de situation est réalisée au moyen d'un changement de repère de la caméra contexte à la caméra dédiée, en connaissant l'information de profondeur dans le repère de l'image contexte grâce au traitement de l'image issue du télédétecteur 10. Le cadre de désignation repositionné encadrant une partie réduite de la face avant du véhicule en infraction contient par construction sa plaque d'immatriculation et sert ainsi à désigner le véhicule dans l'image de situation.

Enfin, il est procédé à l'application EI9 de floutage dans une zone périphérique extérieure audit cadre bidimensionnel propre au véhicule contrôlé de l'image de situation et à l'affichage du cadre de désignation repositionné, l'image de situation obtenue formant l'image du document d'image. Ce floutage de l'image de situation autour du cadre bidimensionnel analytique propre au véhicule contrôlé permet que les visages et les plaques des autres véhicules ne puissent pas être reconnus.

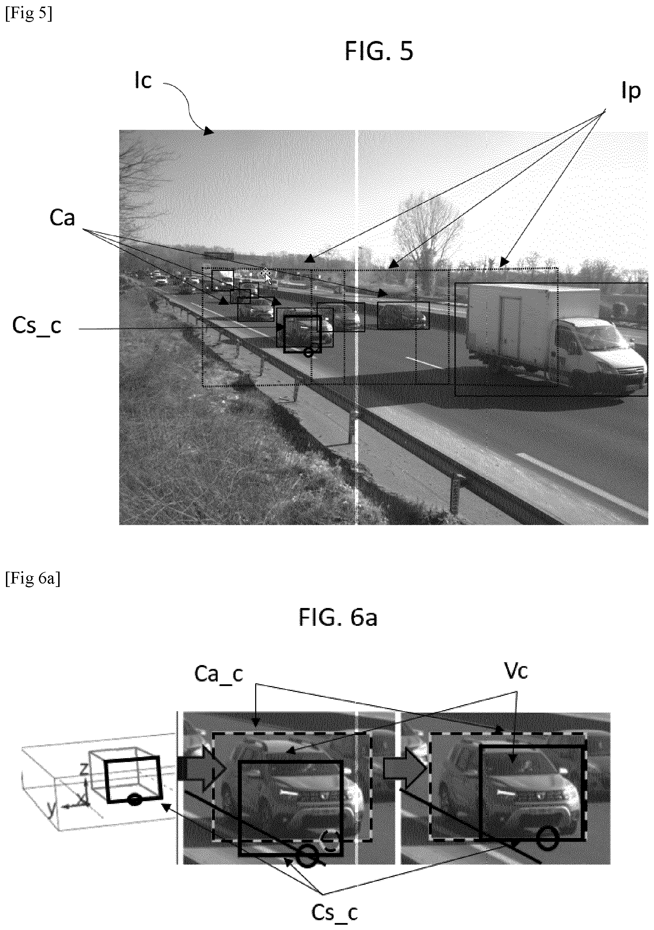

La figure 5 [fig. 5] illustre le cas où le dispositif de prise de vues 20 comporte plusieurs caméras, ce qui n'est pas nécessairement le cas, dont une de contexte panoramique et trois caméras de champ plus réduit, appelées caméra plaque. L' image de contexte Ic, est ici acquise par une caméra de contexte panoramique, dans laquelle on identifie les trois sous zones qui représentent les vues Ip des caméras plaques, ici au nombre de trois, figurées par des contours pointillés, l'ensemble de ces caméras formant le dispositif de prises de vues 20. Apparaissent également sur cette image bidimensionnelle, dite ici de contexte Ic, acquise et enrichie, les rectangles analytiques Ca (pour des raisons de clarté tous ne sont pas fléchés sur la figure) en trait plein entourant chacun des véhicules appartenant pour tout ou partie aux sous zones couvertes par les trois caméras plaques. Apparait également sur cette figure ladite représentation du véhicule contrôlé sous forme d'un cadre Cs_c dérivé du cuboïde de dimension standards et comportant la marque d'alignement désignant le point de piste sous forme de cercle, ces éléments étant tracés en traits plein gras.

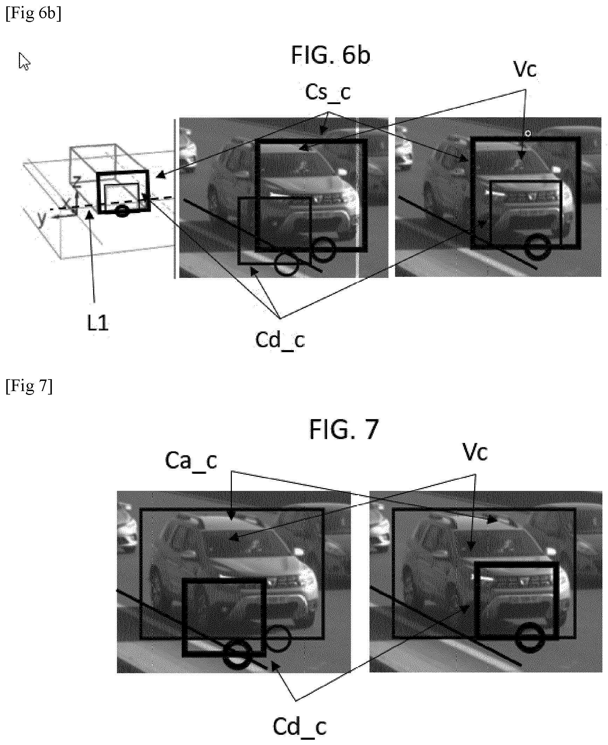

Les figures 6a et b [fig. 6a], [fig 6b] et 7 [fig. 7] illustrent les étapes de transposition EI6 et repositionnement EI7 sous une forme de tryptique, avec à gauche le repère de la voie de circulation, qui ne contient donc que le cuboïde représenté dans cet espace, au milieu et à gauche une partie de l'image bidimensionnelle focalisée sur le véhicule Vc contrôlé identifié, au milieu étant l'état initial avant l'étape en question puis à droite l'état à l'issue de l'exécution de ladite étape. Le repère de la voie de circulation est orthonormé, l'axe x étant dans le sens opposé au sens de circulation de la voie, l'axe z étant vertical dirigé vers le haut, la ligne en trait plein gras représentant la piste. La ligne de mesure L1 est représentée en trait pointillé.

Soit cette étape de repositionnement EI7 est effectuée en deux temps avec :
- une étape intermédiaire illustrée figure 6a consistant en un premier recalage dans le repère image du cadre Cs_c dérivé du cuboïde de dimension standards (en trait plein)et de sa marque d'alignement sur la marque de centrage du cadre Ca_c bidimensionnel analytique propre au véhicule contrôlé (en trait pointillé) ;
- puis un repositionnement, illustré figure 6b, du cadre Cd_c de désignation, tracé en trait plein fin, de manière à superposer sa marque d'alignement sur la marque d'alignement du cadre Cs_c recalé dérivé du cuboïde de dimension standards dans l'image bidimensionnelle ;
Soit, tel qu'illustré en figure 7, ce repositionnement du cadre de désignation Cd_c (trait fin plein) est directement effectué dans le cadre Ca_c bidimensionnel analytique propre au véhicule contrôlé, représenté en trait plein , avec sa marque de centrage, ici circulaire, située au quart de son côté inférieur en partant du coin inférieur droit du rectangle analytique en question.

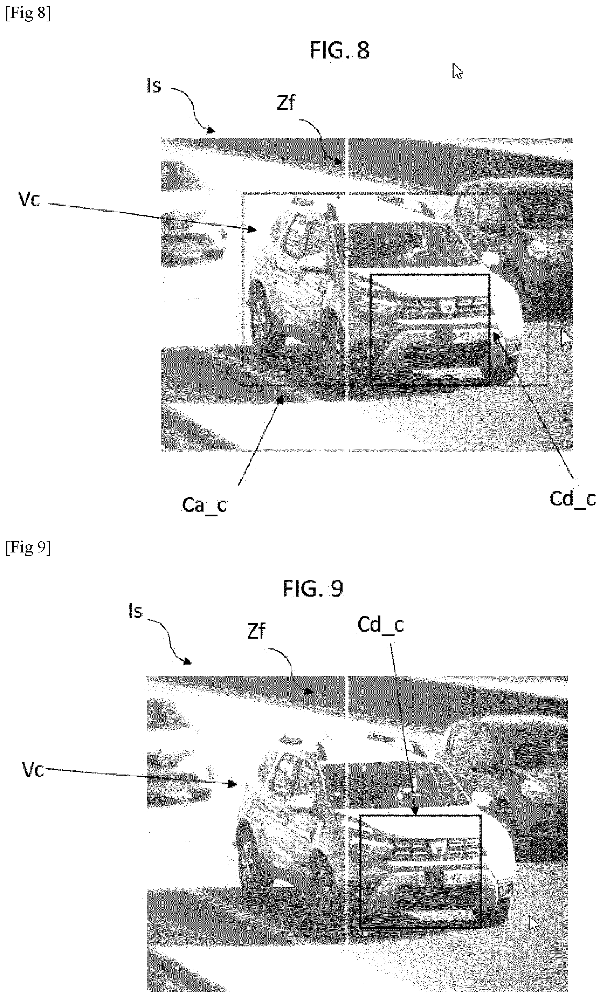

La figure 8 [fig. 8] est un exemple d'image de situation Is, enrichie d'informations explicatives, ici constituée par la sélection d'une sous-partie de l'image Ip acquise par la caméra plaque (la plus à gauche sur l'image de contexte Ic). L'image de situation Is est partiellement floutée, la zone floutée Zf s'étendant autour du cadre Ca_c bidimensionnel analytique de dimensions propre au véhicule contrôlé (en pointillés) de l'image de situation Is, et l'image de situation Is contient de manière visible le cadre de désignation Cd_c (en trait plein) et de sa marque d'alignement , le cadre de désignation Cd_c étant situé à l'intérieur dudit cadre Ca_c bidimensionnel lui-même non représenté physiquement sur le document d'image tel qu'illustré en figure 9.

La figure 9 [fig. 9] est un exemple de l'image de situation Is, partiellement floutée, telle que figurant sur un document image selon l'invention, toute la partie de l'image de situation Is extérieure au cadre Ca_c bidimensionnel appartient à la zone floutée Zf et toute partie de l'image de situation Is située à l'intérieur du cadre Ca_c bidimensionnel (non visible) est non floutée, et le cadre de désignation Cd_c étant visible.

Enfin, un véhicule de l'image de situation Is est désigné en tant que véhicule contrôlé si son cadre de désignation Cd_c figure individuellement et complètement sur l'image de situation Is.

Préférentiellement, les images bidimensionnelles sont acquises en couleur et l'image du document d'image est passée en noir et blanc préalablement à l'étape EI9 d'application de floutage, le cadre de désignation étant en couleur de manière à bien le visualiser.

L'invention n'est pas limitée au mode de réalisation décrit et représenté aux figures annexées. Des modifications restent possibles, notamment du point de vue de la constitution des diverses caractéristiques techniques ou par substitution d'équivalents techniques, à la condition que la portée des revendications ainsi modifiées reste dans le domaine de protection défini par le jeu de revendications joint.

## Revendications

1. Procédé (1) de génération d'un document d'image dans lequel un véhicule (Vc), sur une voie de circulation routière (2a), contrôlé par un système de contrôle de véhicules (S), est désigné, le système de contrôle de véhicules (S) étant disposé fixe et comprenant une unité (30) de contrôle, un télédétecteur (10) comprenant un capteur radar et/ou lidar et un dispositif (20) de prises de vues tel qu'un capteur image ou vidéo, notamment une caméra, le télédétecteur (10) opérant sur un champ de télédétection radar et/ou lidar (11) couvrant au moins ladite voie de circulation (2a,2b), le dispositif de prises de vues (20) opérant sur un champ de détection optique (21) comprenant tout ou partie de ladite voie de circulation couverte par le champ de télédétection (11) radar et/ou lidar;
ledit procédé (1) comprenant des étapes de:
- acquisition (ER1) par le télédétecteur (10) d'un point de piste de coordonnées représentatives du véhicule contrôlé (Vc), dans un repère lié à la voie de circulation (2a);
- acquisition (EI1) par le dispositif (20) de prises de vues d'une image bidimensionnelle(Ic, Ip) à un moment déterminé;
- transposition (EI2) d'une représentation du véhicule contrôlé (Vc) dans le repère lié à la voie de circulation vers un repère de l'image bidimensionnelle, ladite représentation du véhicule contrôlé (Vc) dans le repère de l'image bidimensionnelle correspondant à un cadre (Cs_c) de représentation du véhicule contrôlé comportant une marque d'alignement désignant le point de piste ;
- analyse (EI3) de l'image bidimensionnelle (Ic, Ip) de manière à détecter dans le repère de l'image tout ou partie des véhicules (Vc, Vnc) présents sur l'image et à entourer chacun des véhicules détectés par un cadre bidimensionnel analytique (Ca), notamment par mise en œuvre de réseaux de neurones ;
- identification (EI4) dans l'image bidimensionnelle (Ic, Ip) du cadre bidimensionnel propre au véhicule contrôlé (Ca_c) parmi les cadres bidimensionnel analytique (Ca) entourant les véhicules détectés par analyse de proximité entre chacun desdits cadres (Ca) bidimensionnels analytiques et la représentation (Cs_c) du véhicule contrôlé dans ladite image ;
- transposition (EI6) dans l'image bidimensionnelle (Ic, Ip) d'un cadre de désignation (Cd_c) défini en relation avec la représentation du véhicule contrôlé et de dimensions déterminées en fonction du véhicule contrôlé;
- repositionnement (EI7) du cadre de désignation (Cd_c) dans l'image bidimensionnelle (Ic,Ip), ledit cadre de désignation (Cd_c) étant déplacé avec ladite marque d'alignement du cadre de représentation du véhicule contrôlé de manière à ce que ladite marque d'alignement soit superposée à une marque de centrage du cadre (Ca_c) bidimensionnel propre au véhicule ; le positionnement de ladite marque de centrage dans le cadre (Ca_c) bidimensionnel dépendant du placement du système de contrôle de véhicules (S) par rapport à la voie de circulation (2a) de manière à s'adapter à l'effet de perspective lié audit placement;
- sélection (EI8) d'une image de situation (Is) comprenant le cadre (Ca c) bidimensionnel propre au véhicule contrôlé et le cadre (Cd c) de désignation repositionné, l'image de situation (Is) obtenue formant l'image du document d'image.

2. Procédé (1) de génération d'un document d'image selon la
revendication précédente **caractérisé en ce qu'**il comporte une étape d'application (EI9) de floutage dans une zone périphérique extérieure audit cadre (Ca_c) bidimensionnel propre au véhicule contrôlé de l'image de situation (Is) et affichage du cadre (Cd c) de désignation repositionné.

3. Procédé (1) de génération d'un document d'image selon la
revendication précédente **caractérisé en ce que** les coordonnées du point de piste sont bidimensionnelles ou tridimensionnelles.

4. Procédé (1) de génération d'un document d'image selon l'une
quelconque des revendications précédentes **caractérisé en ce que**, dans le repère bidimensionnel de l'image, ladite marque d'alignement est centrée sur le point piste.

5. Procédé (1) de génération d'un document d'image selon l'une
quelconque des revendications précédentes **caractérisée en ce que** chaque cadre (Ca) bidimensionnel analytique entourant un véhicule comporte au moins un point caractéristique qui appartient au plan de la voie de circulation (2a).

6. Procédé (1) de génération d'un document d'image selon l'une
quelconque des revendications précédentes **caractérisé en ce que** chaque cadre (Ca) bidimensionnel analytique entourant un véhicule (Vc, Vnc) est une forme géométrique notamment un rectangle, dont les dimensions sont minimisées tout en contenant ledit véhicule intégralement.

7. Procédé (1) de génération d'un document d'image selon l'une
quelconque des revendications précédentes **caractérisé en ce qu'**il comporte une étape de classification (EI5) du véhicule contrôlé (Vc) parmi des classes de véhicules prédéterminées par analyse du cadre (Ca c) bidimensionnel propre audit véhicule contrôlé.

8. Procédé (1) de génération d'un document d'image selon l'une
quelconque des revendications précédentes **caractérisé en ce qu'**à l'étape d'indentification (EI4) le cadre (Ca_c) bidimensionnel propre au véhicule contrôlé est identifié dans l'image bidimensionnelle comme étant le cadre (Ca) bidimensionnel analytique le plus proche de la représentation du véhicule contrôlé contenant tout ou partie de ladite représentation du véhicule contrôlé, notamment par calcul de scores d'intersections entre chaque cadre (Ca) bidimensionnel analytique de l'image et la représentation (Cs_c) du véhicule contrôlé dans le repère de l'image.

9. Procédé (1) de génération d'un document d'image selon la
revendication précédente **caractérisé en ce qu'**il comporte une étape de confirmation de l'identification dans l'image bidimensionnelle du cadre (Ca_c) bidimensionnel propre au véhicule contrôlé pendant laquelle il est vérifié dans le repère lié à la voie de circulation que la marque de centrage du cadre bidimensionnel propre au véhicule est proche, notamment à moins de 2 mètres, du point piste.

10. Procédé (1) de génération d'un document d'image selon l'une
quelconque des revendications précédentes **caractérisé en ce que** le cadre (Ca_c) bidimensionnel propre au véhicule est un rectangle et sa marque de centrage est située sur son côté inférieur et positionnée au quart de sa longueur en partant du coin inférieur droit dudit rectangle.

11. Procédé (1) de génération d'un document d'image selon l'une
quelconque des revendications précédentes, **caractérisé en ce que** le le cadre (Cd_c) de désignation a des dimensions caractéristiques liées à la classe du véhicule contrôlé (Vc), ledit cadre de désignation (Cd_c) est notamment de forme rectangulaire dont les côtés sont préférentiellement verticaux et horizontaux dans le repère de l'image bidimensionnelle.

12. Procédé (1) de génération d'un document d'image selon l'une
quelconque des revendications précédentes, **caractérisé en ce que** le télédétecteur (10) et le dispositif (20) de prises de vues sont disposés et orientés complètement ou partiellement face à un sens de circulation sur ladite voie de circulation du véhicule contrôlé.

13. Procédé (1) de génération d'un document d'image selon l'une quelconque des revendications précédentes **caractérisé en ce que**
- l'image de situation (Is) est tout ou partie de ladite image bidimensionnelle (Ic, Ip) acquise par le dispositif (20) de prises de vues à l'étape d'acquisition (EI1) de l'image bidimensionnelle (Ic, Ip) ;
ou
- l'image de situation (Is) est acquise par un autre dispositif de prises de vues du système de contrôle de véhicules (S) au même moment déterminé que l'étape d'acquisition (EI1) de l'image bidimensionnelle (Ic, Ip) et **en ce que** l'étape de sélection (EI8) comporte une sous-étape de transposition dans ladite image de situation (Is) du cadre (Ca_c) bidimensionnel propre au véhicule contrôlé et du cadre (Cd_c) de désignation repositionné.

14. Procédé (1) de génération d'un document d'image selon l'une
quelconque des revendications précédentes, **caractérisé en ce qu'**à l'étape de sélection (EI8) l'image de situation (Is) est sélectionnée de manière à ce que ledit cadre de désignation (Cd_c) repositionné figure individuellement et complètement sur l'image de situation (Is) et il est notamment vérifié lors de ladite étape de sélection (EI8) que le cadre de désignation (Cd_c) comporte une plaque d'immatriculation complète dudit véhicule (Vc).

15. Système (S) de contrôle de véhicules (Vc, Vnc) sur une voie de
circulation routière (2a), disposé fixe et comprenant une unité de contrôle (30), un télédétecteur (10) comprenant un capteur radar et/ou lidar et un dispositif (20) de prises de vues tel qu'un capteur image ou vidéo, notamment une caméra, le télédétecteur (10) opérant sur un champ (11) de télédétection radar et/ou lidar couvrant au moins ladite voie de circulation, le dispositif de prises de vues (20) opérant sur un champ de détection optique (21) comprenant tout ou partie de ladite voie de circulation couverte par le champ de télédétection (11) radar et/ou lidar, **caractérisé en ce que** l'unité de contrôle (30) met en œuvre un procédé (1) de génération d'un document d'image selon l'une quelconque des revendications précédentes.

16. Document d'image, dans lequel un véhicule (Vc) contrôlé par un
système de contrôle de véhicules (S) et roulant sur une voie de circulation (2a) est désigné, le document d'image étant généré par un procédé (P) selon une des revendications 1 à 14.

17. Document d'image selon la revendication précédente **caractérisé en ce que** ledit document comprend :
- une image de situation (Is) partiellement floutée, une zone floutée (Zf) s'étendant autour d'un cadre (Ca_c) bidimensionnel propre au véhicule contrôlé de l'image de situation (Is) du document d'image; notamment toute partie de l'image de situation (Is) extérieure au cadre bidimensionnel (Ca_c) appartient à la zone floutée (Zf) et toute partie de l'image de situation (Is) située à l'intérieur du cadre bidimensionnel (Ca_c) est non floutée ; et
- un cadre de désignation (Cd_c) visible superposant l'image de situation (Is), le cadre de désignation (Cd_c) étant situé à l'intérieur dudit cadre (Ca_c) bidimensionnel.

## Patentansprüche

1. Verfahren (1) zur Erzeugung eines Bilddokuments, wobei ein Fahrzeug (Vc) auf einer Fahrspur (2a) dargestellt wird, das von einem Fahrzeugüberwachungssystem (S) überwacht wird, wobei das Fahrzeugüberwachungssystem (S) ortsfest angeordnet ist und eine Steuereinheit (30), einen Fernerfassungssensor (10) mit einem Radar- und/oder Lidar-Sensor und eine Bildaufnahmevorrichtung (20) wie einen Bild- oder Videosensor, insbesondere eine Kamera, umfasst wobei der Fernerfassungssensor (10) in einem Radar- und/oder Lidar-Fernerfassungsfeld (11) arbeitet, das mindestens die Fahrspur (2a, 2b) abdeckt, wobei die Bildaufnahmevorrichtung (20) in einem optischen Erfassungsfeld (21) arbeitet, das die gesamte oder einen Teil der Fahrspur umfasst, die vom Radar- und/oder Lidar-Fernerfassungsfeld (11) abgedeckt wird, wobei das Verfahren (1) folgende Schritte umfasst:
- Erfassung (ER1) eines Spurpunkts mit repräsentativen Koordinaten des überwachten Fahrzeugs (Vc) durch den Fernerfassungssensor (10) in einem auf die Fahrspur (2a) bezogenen Koordinatensystem,
- Erfassung (EI1) eines zweidimensionalen Bildes (Ic, Ip) durch die Bildaufnahmevorrichtung (20) zu einem bestimmten Zeitpunkt,
- Übertragung (EI2) einer Darstellung des überwachten Fahrzeugs (Vc) in dem auf die Fahrspur bezogenen Koordinatensystem in ein Koordinatensystem des zweidimensionalen Bildes, wobei die Darstellung des überwachten Fahrzeugs (Vc) im Koordinatensystem des zweidimensionalen Bildes einem Darstellungsrahmen (Cs_c) des überwachten Fahrzeugs entspricht, der eine Ausrichtungsmarke enthält, die den Spurpunkt bezeichnet,
- Analyse (EI3) des zweidimensionalen Bildes (Ic, Ip), um im Bildkoordinatensystem alle oder einen Teil der auf dem Bild vorhandenen Fahrzeuge (Vc, Vnc) zu erkennen und jedes der erkannten Fahrzeuge mit einem zweidimensionalen analytischen Rahmen (Ca) zu umgeben, insbesondere unter Verwendung neuronaler Netze,
- Identifizierung (EI4) des für das überwachte Fahrzeug spezifischen zweidimensionalen Rahmens (Ca_c) im zweidimensionalen Bild (Ic, Ip) unter den zweidimensionalen analytischen Rahmen (Ca), die die erfassten Fahrzeuge umgeben, durch Analyse der Nähe zwischen jedem der zweidimensionalen analytischen Rahmen (Ca) und der Darstellung (Cs_c) des überwachten Fahrzeugs in dem Bild,
- Übertragung (EI6) eines in Bezug auf die Darstellung des überwachten Fahrzeugs definierten und in Abhängigkeit vom überwachten Fahrzeug in seinen Abmessungen festgelegten Markierungsrahmens (Cd_c) in das zweidimensionale Bild (Ic, Ip),
- Neupositionierung (EI7) des Markierungsrahmens (Cd_c) im zweidimensionalen Bild (Ic, Ip), wobei der Markierungsrahmen (Cd_c) zusammen mit der Ausrichtungsmarke des Darstellungsrahmens des überwachten Fahrzeugs so verschoben wird, dass die Ausrichtungsmarke einer Zentriermarke des fahrzeugspezifischen zweidimensionalen Rahmens (Ca_c) überlagert wird, wobei die Positionierung der Zentriermarke im zweidimensionalen Rahmen (Ca_c) von der Anordnung des Fahrzeugüberwachungssystems (S) relativ zur Fahrspur (2a) abhängt, um sich an den mit dieser Anordnung verbundenen perspektivischen Effekt anzupassen,
- Auswahl (EI8) eines Situationsbildes (Is), das den für das kontrollierte Fahrzeug spezifischen zweidimensionalen Rahmen (Ca_c) und den neu positionierten Markierungsrahmen (Cd_c) umfasst, wobei das erhaltene Situationsbild (Is) das Bild des Bilddokuments bildet.

2. Verfahren (1) zur Erzeugung eines Bilddokuments nach dem vorstehenden Anspruch, **dadurch gekennzeichnet, dass** es einen Schritt (EI9) zum Anwenden einer Unschärfe in einem äußeren Randbereich des für das überwachte Fahrzeug spezifischen zweidimensionalen Rahmens (Ca_c) des Situationsbildes (Is) und zum Anzeigen des neu positionierten Markierungsrahmens (Cd_c) umfasst.

3. Verfahren (1) zur Erzeugung eines Bilddokuments nach dem vorstehenden Anspruch, **dadurch gekennzeichnet, dass** die Koordinaten des Spurpunkts zweidimensional oder dreidimensional sind.

4. Verfahren (1) zur Erzeugung eines Bilddokuments nach einem der vorstehenden Ansprüche, **dadurch gekennzeichnet, dass** im zweidimensionalen Koordinatensystem des Bildes die Ausrichtungsmarke auf den Spurpunkt zentriert ist.

5. Verfahren (1) zur Erzeugung eines Bilddokuments nach einem der vorstehenden Ansprüche, **dadurch gekennzeichnet, dass** jeder ein Fahrzeug umgebende zweidimensionale analytische Rahmen (Ca) mindestens einen charakteristischen Punkt aufweist, der zur Ebene der Fahrspur (2a) gehört.

6. Verfahren (1) zur Erzeugung eines Bilddokuments nach einem der vorstehenden Ansprüche, **dadurch gekennzeichnet, dass** jeder ein Fahrzeug (Vc, Vnc) umgebende zweidimensionale analytische Rahmen (Ca) eine geometrische Form, insbesondere ein Rechteck, ist, dessen Abmessungen so minimiert sind, dass das Fahrzeug vollständig darin enthalten ist.

7. Verfahren (1) zur Erzeugung eines Bilddokuments nach einem der vorstehenden Ansprüche, **dadurch gekennzeichnet, dass** es einen Schritt (E15) zur Klassifizierung des überwachten Fahrzeugs (Vc) in vorbestimmte Fahrzeugklassen durch Analyse des für das überwachte Fahrzeug spezifischen zweidimensionalen Rahmens (Ca_c) umfasst.

8. Verfahren (1) zur Erzeugung eines Bilddokuments nach einem der vorstehenden Ansprüche, **dadurch gekennzeichnet, dass** im Identifizierungsschritt (EI4) der dem überwachten Fahrzeug eigene zweidimensionale Rahmen (Ca_c) im zweidimensionalen Bild als der zweidimensionale analytische Rahmen (Ca) identifiziert wird, der der Darstellung des überwachten Fahrzeugs am nächsten liegt und diese Darstellung ganz oder teilweise enthält, insbesondere durch Berechnung von Schnittpunktwerten zwischen jedem analytischen zweidimensionalen Rahmen (Ca) des Bildes und der Darstellung (Cs_c) des überwachten Fahrzeugs im Bildkoordinatensystem.

9. Verfahren (1) zur Erzeugung eines Bilddokuments nach dem vorstehenden Anspruch, **dadurch gekennzeichnet, dass** es einen Schritt zur Bestätigung der Identifizierung des (Ca_c) im Bild umfasst, während dessen im auf die Fahrspur bezogenen Koordinatensystem überprüft wird, ob die Zentriermarke des fahrzeugspezifischen zweidimensionalen Rahmens nahe, insbesondere weniger als 2 Meter, am Spurpunkt liegt.

10. Verfahren (1) zur Erzeugung eines Bilddokuments nach einem der vorstehenden Ansprüche, **dadurch gekennzeichnet, dass** der dem Fahrzeug eigene zweidimensionale Rahmen (Ca_c) ein Rechteck ist und seine Zentriermarke an seiner Unterseite angeordnet und im Abstand von einem Viertel seiner Länge, gemessen von der unteren rechten Ecke des Rechtecks, positioniert ist.

11. Verfahren (1) zur Erzeugung eines Bilddokuments nach einem der vorstehenden Ansprüche, **dadurch gekennzeichnet, dass** der Markierungsrahmen (Cd_c) charakteristische Abmessungen aufweist, die mit der Klasse des überwachten Fahrzeugs (Vc) zusammenhängen, wobei der Markierungsrahmen (Cd_c) insbesondere rechteckig ist, wobei seine Seiten im Koordinatensystem des zweidimensionalen Bildes vorzugsweise vertikal und horizontal verlaufen.

12. Verfahren (1) zur Erzeugung eines Bilddokuments nach einem der vorstehenden Ansprüche, **dadurch gekennzeichnet, dass** der Fernerfassungssensor (10) und die Bildaufnahmevorrichtung (20) vollständig oder teilweise in Fahrtrichtung auf der Fahrspur des überwachten Fahrzeugs angeordnet und ausgerichtet sind.

13. Verfahren (1) zur Erzeugung eines Bilddokuments nach einem der vorstehenden Ansprüche, **dadurch gekennzeichnet, dass**
- das Situationsbild (Is) das gesamte oder ein Teil des zweidimensionalen Bildes (Ic, Ip) ist, das von der Bildaufnahmevorrichtung (20) im Erfassungsschritt (EI1) des zweidimensionalen Bildes (Ic, Ip) erfasst wurde, oder
- das Situationsbild (Is) von einer anderen Bildaufnahmevorrichtung des Fahrzeugüberwachungssystems (S) zu demselben festgelegten Zeitpunkt wie der Erfassungsschritt (EI1) des zweidimensionalen Bildes (Ic, Ip) erfasst wird, und dass der Auswahlschritt (EI8) einen Teilschritt der Übertragung des für das überwachte Fahrzeug spezifischen zweidimensionalen Rahmens (Ca_c) und des neu positionierten Markierungsrahmens (Cd_c) in das Situationsbild (Is) umfasst.

14. Verfahren (1) zur Erzeugung eines Bilddokuments nach einem der vorstehenden Ansprüche, **dadurch gekennzeichnet, dass** im Auswahlschritt (EI8) das Situationsbild (Is) derart gewählt wird, dass der neu positionierte Markierungsrahmen (Cd_c) einzeln und vollständig auf dem Situationsbild (Is) erscheint und insbesondere in dem Auswahlschritt (EI8) überprüft wird, ob der Markierungsrahmen (Cd_c) ein vollständiges Kennzeichen des Fahrzeugs (Vc) enthält.

15. System (S) zur Überwachung von Fahrzeugen (Vc, Vnc) auf einer Fahrspur (2a), das ortsfest angeordnet ist und eine Steuereinheit (30), einen Fernerfassungssensor (10) mit einem Radar- und/oder Lidar-Sensor und eine Bildaufnahmevorrichtung (20) wie einen Bild- oder Videosensor, insbesondere eine Kamera, umfasst, wobei der Fernerfassungssensor (10) in einem Radar- und/oder Lidar-Fernerfassungsfeld (11) arbeitet, das mindestens die Fahrspur abdeckt, und wobei die Bildaufnahmevorrichtung (20) in einem optischen Erfassungsfeld (21) arbeitet, das die gesamte oder einen Teil der Fahrspur umfasst, die vom Radar- und/oder Lidar-Fernerfassungsfeld (11) abgedeckt ist, **dadurch gekennzeichnet, dass** die Steuereinheit (30) ein Verfahren (1) zur Erzeugung eines Bilddokuments nach einem der vorstehenden Ansprüche ausführt.

16. Bilddokument, wobei ein von einem Fahrzeugüberwachungssystem (S) gesteuertes und auf einer Fahrspur (2a) fahrendes Fahrzeug (Vc) dargestellt ist, wobei das Bilddokument durch ein Verfahren (P) nach einem der Ansprüche 1 bis 14 erzeugt ist.

17. Bilddokument nach dem vorstehenden Anspruch, **dadurch gekennzeichnet, dass** das Dokument umfasst:
- ein teilweise unscharfes Situationsbild (Is), wobei sich ein unscharfer Bereich (Zf) um einen zweidimensionalen, für das gesteuerte Fahrzeug spezifischen Rahmen (Ca_c) des Situationsbildes (Is) des Bilddokuments erstreckt, wobei insbesondere jeder Teil des Situationsbildes (Is) außerhalb des zweidimensionalen Rahmens (Ca_c) zum unscharfen Bereich (Zf) gehört und jeder Teil des Situationsbildes (Is) innerhalb des zweidimensionalen Rahmens (Ca_c) scharf ist, und
- einen sichtbaren Markierungsrahmen (Cd_c), der das Situationsbild (Is) überlagert, wobei sich der Markierungsrahmen (Cd_c) innerhalb des zweidimensionalen Rahmens (Ca_c) befindet.

## Claims

1. A method (1) for generating an image document in which a vehicle (Vc), on a road traffic lane (2a), controlled by a vehicle control system (S), is designated, the vehicle control system (S) being fixedly disposed and comprising a control unit (30), a remote detector (10) comprising a radar and/or lidar sensor and a shooting device (20) such as an image or video sensor, especially a camera, the remote detector (10) operating on a radar and/or lidar remote detection field (11) covering at least said traffic lane (2a, 2b), the shooting device (20) operating on an optical detection field (21) comprising all or part of said traffic lane covered by the radar and/or lidar remote detection field (11); said method (1) comprising steps of:
- by the remote detector (10), acquiring (ER1) a track point with coordinates representative of the controlled vehicle (Vc), in a reference frame system related to the traffic lane (2a);
- by the shooting device (20), acquiring (EI1) a two-dimensional image (Ic, Ip) at a given time;
- transposing (EI2) a representation of the controlled vehicle (Vc) in the reference frame related to the traffic lane to a reference frame of the two-dimensional image, said representation of the controlled vehicle (Vc) in the reference frame of the two-dimensional image corresponding to a frame (Cs_c) of representation of the controlled vehicle including an alignment mark designating the track point;
- analysing (EI3) the two-dimensional image (Ic, Ip) so as to detect in the reference frame of the image all or part of the vehicles (Vc, Vnc) present in the image and to enclose each of the vehicles detected with a two-dimensional analytical frame (Ca), in particular by using neural networks;
- in the two-dimensional image (Ic, Ip), identifying (EI4) the two-dimensional frame specific to the controlled vehicle (Ca_c) among the two-dimensional analytical frames (Ca) surrounding the vehicles detected by proximity analysis between each of said two-dimensional analytical frames (Ca) and the representation (Cs_c) of the controlled vehicle in said image;
- transposing (EI6) into the two-dimensional image (Ic, Ip) a designation frame (Cd_c) defined in relation to the representation of the controlled vehicle and with dimensions determined according to the controlled vehicle;
- repositioning (EI7) the designation frame (Cd_c) in the two-dimensional image (Ic,Ip), said designation frame (Cd_c) being moved with said alignment mark of the representation frame of the controlled vehicle so that said alignment mark is superimposed with a two-dimensional frame centring mark (Ca_c) specific to the vehicle; positioning of said centring mark in the two-dimensional frame (Ca_c) depending on the placement of the vehicle control system (S) relative to the traffic lane (2a) so as to adapt to the perspective effect related to said placement;
- selecting (EI8) a situation image (Is) comprising the two-dimensional frame (Ca c) specific to the controlled vehicle and the designation frame (Cd c) repositioned, the situation image (Is) obtained forming the image of the image document.

2. The method (1) for generating an image document according to the preceding claim, **characterised in that** it includes a step (EI9) of applying blurring to an outer peripheral zone of said two-dimensional frame (Ca_c) specific to the controlled vehicle of the situation image (Is) and displaying the repositioned designation frame (Cd c).

3. The method (1) for generating an image document according to the preceding claim, **characterised in that** the coordinates of the track point are two-dimensional or three-dimensional coordinates.

4. The method (1) for generating an image document according to any one of the preceding claims, **characterised in that**, in the two-dimensional reference frame of the image, said alignment mark is centred on the track point.

5. The method (1) for generating an image document according to any one of the preceding claims, **characterised in that** each two-dimensional analytical frame (Ca) surrounding a vehicle includes at least one characteristic point that belongs to the plane of the traffic lane (2a).

6. The method (1) for generating an image document according to any one of the preceding claims, **characterised in that** each two-dimensional analytical frame (Ca) surrounding a vehicle (Vc, Vnc) is a geometric shape, in particular a rectangle, the dimensions of which are minimised while containing said vehicle in its entirety.

7. The method (1) for generating an image document according to any one of the preceding claims, **characterised in that** it includes a step of classifying (EI5) the controlled vehicle (Vc) among predetermined vehicle classes by analysing the two-dimensional frame (Ca c) specific to said controlled vehicle.

8. The method (1) for generating an image document according to any one of the preceding claims, **characterised in that** in the identification step (EI4), the two-dimensional frame (Ca_c) specific to the controlled vehicle is identified in the two-dimensional image as being the two-dimensional analytical frame (Ca) closest to the representation of the controlled vehicle containing all or part of said representation of the controlled vehicle, in particular by calculating intersection scores between each two-dimensional analytical frame (Ca) of the image and the representation (Cs_c) of the vehicle controlled in the image reference frame.

9. The method (1) for generating an image document according to the preceding claim, **characterised in that** it includes a step of confirming the identification in the two-dimensional image of the two-dimensional frame (Ca_c) specific to the controlled vehicle during which it is verified in the reference frame related to the traffic lane that the centring mark of the two-dimensional frame specific to the vehicle is close, especially less than 2 metres, to the track point.

10. The method (1) for generating an image document according to any one of the preceding claims, **characterised in that** the two-dimensional frame (Ca_c) specific to the vehicle is a rectangle and its centring mark is located on its lower side and positioned at a quarter of its length starting from the lower right corner of said rectangle.

11. The method (1) for generating an image document according to any one of the preceding claims, **characterised in that** the designation frame (Cd_c) has characteristic dimensions related to the class of the controlled vehicle (Vc), said designation frame (Cd_c) is in particular rectangular in shape, with sides which are preferably vertical and horizontal in the reference frame of the two-dimensional image.

12. The method (1) for generating an image document according to any one of the preceding claims, **characterised in that** the remote detector (10) and the shooting device (20) are disposed and oriented so as to face, completely or partially, a direction of traffic on said traffic lane of the controlled vehicle.

13. The method (1) for generating an image document according to any one of the preceding claims, **characterised in that**
- the situation image (Is) is all or part of said two-dimensional image (Ic, Ip) acquired by the shooting device (20) in the step (EI1) of acquiring the two-dimensional image (Ic, Ip);
or
- the situation image (Is) is acquired by another shooting device of the vehicle control system (S) at a same determined time as the step (EI1) of acquiring the two-dimensional image (Ic, Ip) and **in that** the selection step (EI8) includes a sub-step of transposing in said situation image (Is) the two-dimensional frame (Ca_c) specific to the controlled vehicle and the designation frame (Cd_c) repositioned.

14. The method (1) for generating an image document according to any one of the preceding claims, **characterised in that** in the selection step (EI8), the situation image (Is) is selected such that said repositioned designation frame (Cd_c) appears individually and completely within the situation image (Is), and, in particular, it is verified during said selection step (EI8) that the designation frame (Cd_c) includes a complete number plate of said vehicle (Vc).

15. A system (S) for controlling vehicles (Vc, Vnc) on a road traffic lane (2a), which is fixed in position and comprises a control unit (30), a remote detector (10) comprising a radar and/or lidar sensor and a shooting device (20), such as an image or video sensor, in particular a camera, the remote detector (10) operating within a radar and/or lidar remote detection field (11) covering at least the said traffic lane, the shooting device (20) operating over an optical detection field (21) comprising all or part of said traffic lane covered by the radar and/or lidar remote detection field (11), **characterised in that** the control unit (30) implements a method (1) for generating an image document according to any one of the preceding claims.

16. An image document, wherein a vehicle (Vc) controlled by a vehicle control system (S) and driving on a traffic lane (2a) is designated, the image document being generated by a method (P) according to one of claims 1 to 14.

17. The image document according to the preceding claim, **characterised in that** said document comprises:
- a partially blurred situation image (Is), with a blurred zone (Zf) extending around a two-dimensional frame (Ca_c) specific to the controlled vehicle within the situation image (Is) of the image document; in particular any part of the situation image (Is) outside the two-dimensional frame (Ca_c) belongs to the blurred zone (Zf) and any part of the situation image (Is) located inside the two-dimensional frame (Ca_c) is unblurred; and
- a visible designation frame (Cd_c) superimposing the situation image (Is), the designation frame (Cd_c) being located inside said two-dimensional frame (Ca_c).
